# EUROPÄISCHE PATENTSCHRIFT

(11) **EP 0 508 046 B1**
(45) Veröffentlichungstag und Bekanntmachung des Hinweises auf die Patenterteilung: **29.03.1995**
(21) Anmeldenummer: 92101251.4
(22) Anmeldetag: 27.01.1992
(51) Int. Cl.: C09J 5/00, C08J 3/28, B01J 19/08, B05D 3/06, B05C 9/10, B29B 13/08, B29C 35/08

(54) **Bestrahlungsgerät für Flüssigkeiten**
Radiation apparatus for liquids
Appareil d'irridiation pour liquides

(30) Priorität: 10.04.1991 DE 9104387 U
(43) Veröffentlichungstag der Anmeldung: 14.10.1992
(73) Patentinhaber: THERA Patent GmbH & Co. KG Gesellschaft für industrielle Schutzrechte, D-82229 Seefeld (DE)
(72) Erfinder: Herold, Wolf Dietrich, Dr., W-8031 Seefeld 2 (DE); Bielmeier, Olaf, W-8000 München 40 (DE); Koran, Peter, Dr., W-8120 Weilheim (DE)
(74) Vertreter: Strehl Schübel-Hopf Groening & Partner

(56) Entgegenhaltungen:
- EP-A- 0 279 199
- DE-A- 3 731 321

## Beschreibung

Ein Bestrahlungsgerät für Flüssigkeiten mit den im ersten Teil des Anspruchs 1 angegebenen Merkmalen ist aus DE-A-3702999 bekannt. Bei der Flüssigkeit handelt es sich dort um ein UV-härtbares Reaktionsharz, das ein von einer UV-Strahlungsquelle bestrahltes Röhrchen durchströmt und auf die Behandlungsstelle aufgetragen wird, wo das durch die Bestrahlung aktivierte Harz anschließend polymerisiert.

Die Strahlungsintensität und damit das Ausmaß der Aktivierung nimmt mit der Dicke der bestrahlten Flüssigkeitsschicht exponentiell ab. Die bekannte Vorrichtung arbeitet daher mit einem verhältnismäßig dünnen Röhrchen, wobei auf der von der Strahlungsquelle gegenüberliegenden Seite des Röhrchens ein Reflektor angeordnet ist, damit die das Röhrchen durchströmende Flüssigkeit von zwei entgegengesetzten Seiten bestrahlt wird. In einer Variante wird die Strahlung über einen zylindrischen Stab zugeführt, der von der zu bestrahlenden Flüssigkeit koaxial umströmt wird. In einer weiteren Variante ist die bekannte Vorrichtung so gestaltet, daß eine dünne Strömungsschicht längs einer ebenen oder schwach gekrümmten, bestrahlten Fläche erzeugt wird.

Das Problem, dünne strömende Schichten gleichmäßig mit elektromagnetischer Strahlung zu beaufschlagen, besteht auch bei der Sterilisierung von Flüssigkeiten. Aus FR-A-2500948 ist dazu eine Vorrichtung bekannt, bei der die Flüssigkeit unter Zentrifugalwirkung als dünne Schicht an der Innenwand eines rotierenden kegelförmigen Gefäßes nach oben steigt und dabei von in das Gefäß hineinragenden Leuchtstoffröhren bestrahlt wird.

Bei den bekannten Vorrichtungen besteht die Schwierigkeit, daß zur Erzielung einer homogenen Bestrahlung der gesamten Flüssigkeit eine möglichst dünne Schicht erzeugt werden muß; da ferner die Strömungsgeschwindigkeit durch die zur Aktivierung, Polymerisation bzw. Sterilisation erforderliche Energiemenge pro Flüssigkeitsvolumen begrenzt ist, muß zur Erzielung eines für praktische Zwecke brauchbaren Volumendurchsatzes die Oberfläche der dünnen Flüssigkeit entsprechend groß gemacht werden; je größer aber die Fläche ist, desto schwieriger ist es, sie mit verfügbaren Lichtquellen homogen zu bestrahlen.

Bei der Voraktivierung von polymerisierbaren Flüssigkeiten, etwa Klebstoffen, kommt die weitere Schwierigkeit hinzu, daß die Polymerisation im Anschluß an die Aktivierung einsetzt, so daß an der Wandung des von der Flüssigkeit durchströmten Gefäßes, an der die Strömungsgeschwindigkeit Null ist, eine immer dickere Schicht aufwächst, die nicht nur den Strömungsquerschnitt zunehmend verengt, sondern auch einen immer größer werdenden Anteil der Strahlung absorbiert.

Die FR-Zusatzpatentschrift 90710 offenbart eine Vorrichtung, bei der fließfähige Stoffe durch Rohre gefördert werden, die einer flächigen Ionisations-Strahlungsquelle gegenüber angeordnet sind. In den Rohren befinden sich starre Stäbe, die an ihren Außenseiten schraubenförmige Stege tragen, um auch die Teile des zu bestrahlenden Gutes, die auf der von der Strahlungsquelle abgewandten Seite in das betreffende Rohr eintreten, einer Bestrahlung auszusetzen.

Aus GB-A-639467 ist ferner eine Anordnung bekannt, bei der das Gut ein an seiner Innenseite mit einer schraubenförmigen Nut versehenes Rohr durchströmt. Wiederum soll die Nut bewirken, daß alle Teile des Gutes wenigstens einmal an eine Stelle gebracht werden, die einer parallel zu dem Rohr verlaufenden Strahlungsröhre gegenüberliegt.

Der Erfindung liegt die Aufgabe zugrunde, ein Gerät zum Bestrahlen von Flüssigkeiten anzugeben, das bei möglichst großem Durchsatz an Flüssigkeit pro Zeiteinheit eine möglichst gleichmäßige Beaufschlagung aller Flüssigkeitsbereiche mit der Strahlung gewährleistet. Bei Verwendung zum Voraktivieren von polymerisierbaren Flüssigkeiten soll die erfindungsgemäße Vorrichtung ferner ein Verstopfen so lange wie möglich hinauszögern.

Die erfindungsgemäße Lösung dieser Aufgabe ist im Anspruch 1 gekennzeichnet.

Die danach in der Rohrleitung vorgesehene Mischeinrichtung bewirkt mit ihren Leitflächen, daß eine Laminarströmung der Flüssigkeit in der Rohrleitung verhindert wird und sämtliche Schichten der Flüssigkeitsströmung an die Außenseite der Rohrleitung gelangen. Durch diese Mischung wird eine Strömungsbewegung erzeugt, bei der alle Volumenteile der Flüssigkeit immer wieder an die Rohrwand gelangen, so daß insgesamt eine homogene Bestrahlung der gesamten die Rohrleitung durchströmenden Flüssigkeit gewährleistet wird. Gleichzeitig werden durch die senkrecht zur Rohrachse erzeugten Strömungsvektoren an der Rohrwand Turbulenzen erzeugt, die einem Zuwachsen entgegenwirken. Daher eignet sich die erfindungsgemäße Vorrichtung nicht nur zum Sterilisieren von Wasser oder anderen Flüssigkeiten, sondern auch zum Voraktivieren von strahlungspolymerisierbaren Kunstharzen.

Bei dieser sogenannten Voraktivierung wird eine spezielle Kunstharzformulierung eingesetzt, die bei Bestrahlung mit Licht nicht sofort zu polymerisieren beginnt, sondern deren Erhärtung erst nach einer gewissen Induktionsperiode einsetzt. Dabei werden - meist cycloaliphatische - Epoxide zusammen mit Photoinitiatoren auf Basis von Ferrocensalzen verwendet.

In der Ausgestaltung der Erfindung nach Anspruch 2 ergibt sich der Vorteil, daß ein handelsüblicher statischer Mischer verwendet werden kann, der in ausreichenden Längen verfügbar ist und in Verbindung mit einer entsprechend langen Rohrleitung eine außerordentlich gute Durchmischung der Flüssigkeit ergibt. Eine größere Rohrlänge ist ferner zweckmäßig, um eine ausreichende Bestrahlung auch ohne den Einsatz von Speziallampen sicherzustellen. Bei einer langen Rohrleitung läßt sich die für die jeweilige Flüssigkeit erforderliche Strahlungsdosis durch Abdecken eines Teils der Rohrlänge einstellen. Der nach Anspruch 2 verwendete statische Mischer stellt ferner ein billiges Bauteil dar, das zusammen mit dem beispielsweise aus Acrylglas hergestellten Rohr nach längerer Benutzung des Gerätes oder längerer Pause wegwerfbar ist. Die Verwendung eines statischen Mischers ist ferner im Hinblick auf den Aufbau des Gerätes von Vorteil, als er keinerlei Antrieb benötigt, da die Mischbewegung durch die strömende Flüssigkeit selbst erzeugt wird.

Die in der Weiterbildung nach Anspruch 3 eingesetzten parallel zu der Rohrleitung angeordneten Leuchtstoffröhren, bei denen es sich um handelsübliche Lampen handeln kann, gestatten eine gleichmäßige und intensive Bestrahlung der Rohrleitung an mehreren über den Umfang verteilten Stellen. Außerdem ist der Einsatz von Leuchtstoffröhren insofern vorteilhaft, als die von ihnen erzeugte Wärme verhältnismäßig gering ist.

Die nach Anspruch 4 vorgesehene Kühleinrichtung ergibt den weiteren Vorteil, daß bei Verwendung des Gerätes für strahlungspolymerisierbare Flüssigkeiten die temperaturabhängige Polymerisation innerhalb des Gerätes verzögert wird, so daß die Gefahr einer Verstopfung der Rohrleitung weiter herabgesetzt wird.

Eine besonders effektive Kühleinrichtung ist in den Ansprüchen 5 und 6 angegeben. Die Maßnahme nach Anspruch 6 ist insofern besonders zweckmäßig, als die wirksamste Kühlung an demjenigen Ende der Rohrleitung stattfindet, an dem die Flüssigkeit die größte Strahlungsdosis aufgenommen hat.

In der Ausgestaltung der Erfindung nach Anspruch 7 wird eine derartige Trennung von Reaktionsrohr und Kühlsystem erreicht, daß sich die Rohrleitung mit dem darin befindlichen Mischer und gegebenenfalls der am Austrittsende polymerisierten Flüssigkeit ohne weiteres auswechseln läßt.

Die Weiterbildung der Erfindung nach Anspruch 8 bis 11 ergibt ein besonders kompaktes und in der Herstellung einfaches Gerät, bei dem eine sehr gleichmäßig-allseitige Bestrahlung der Flüssigkeit erreicht wird. Das Merkmal des Anspruchs 9 betrifft dabei eine Maßnahme zur möglichst vollständigen Ausnutzung der verfügbaren Strahlung, während Anspruch 10 der leichten Auswechselbarkeit des Lichtleiter-Blocks dient.

Wird gemäß Anspruch 11 als Strahlungsquelle eine Kaltlichtquelle verwendet, so erübrigen sich Maßnahmen zur Kühlung der Flüssigkeit.

Ausführungsbeispiele der Erfindung werden nachstehend anhand der Zeichnungen näher erläutert; darin zeigen
- Figur 1: eine teilweise geschnittene Seitenansicht eines Bestrahlungsgerätes gemäß einem ersten Ausführungsbeispiel,
- Figur 2: eine vergrößerte Darstellung eines Details der Figur 1 zur Veranschaulichung des in dem Rohr angeordneten statischen Mischers,
- Figur 3: eine Seitenansicht eines Teils eines Bestrahlungsgerätes gemäß einem anderen Ausführungsbeispiel, und
- Figur 4: einen Schnitt längs der Linie IV-IV der Figur 3.

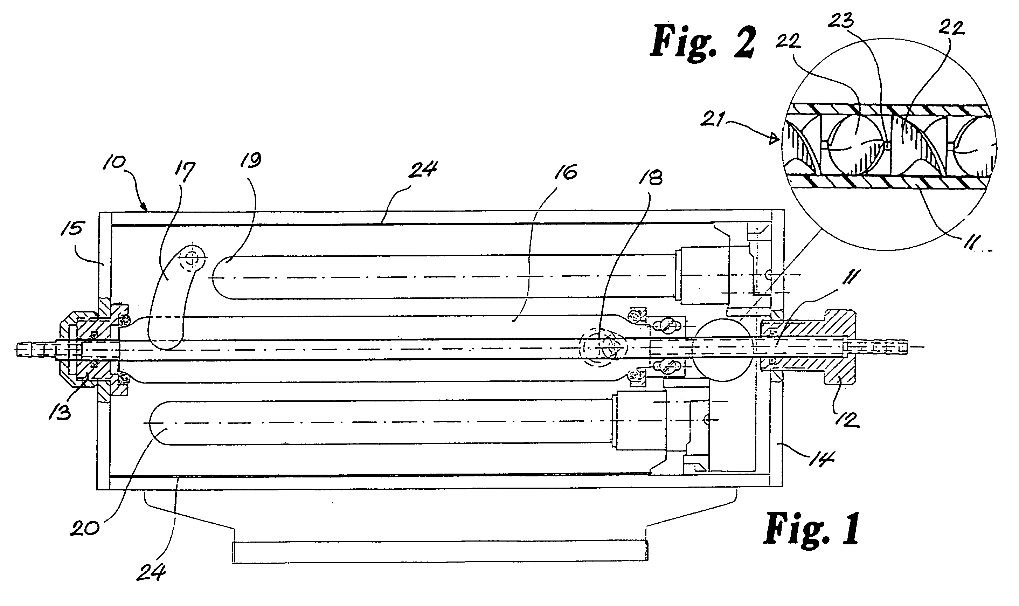

Gemäß Figur 1 umfaßt das Gerät ein Gehäuse 10, das in Längsrichtung von einem Reaktionsrohr 11 durchsetzt wird. Das Rohr 11 wird an beiden Enden über geeignete Buchsen 12, 13 in Stirnplatten 14, 15 des Gehäuses 10 gehalten. Im Betrieb strömt die zu bestrahlende Flüssigkeit gemäß Figur 1 von rechts nach links durch das Rohr 11.

Das Rohr 11 ist im wesentlichen über seine gesamte Länge von einem Kühlgefäß 16 mit ringförmigem Querschnitt umgeben. Über einen Zulaufstutzen 17 und einen in Figur 1 gestrichelt angedeuteten Ablaufstutzen 18 ist das Kühlgefäß 16 an ein oberhalb des Gehäuses 10 angeordnetes (nicht gezeigtes) Kühlaggregat angeschlossen, bei dem es sich um einen Kompressor- oder Peltierkühler handeln kann. In dem Kühlaggregat wird eine Kühlflüssigkeit, beispielsweise ein Glykol-Wasser-Gemisch, abgekühlt, wobei sich eine Konvektionsströmung durch den Zulaufstutzen 17, das das Rohr 11 allseitig umgebende Kühlgefäß 16 und den Ablaufstutzen 18 zurück zu dem Aggregat ergibt.

In dem Gehäuse 10 sind ferner zwei U-förmig gebogene Leuchtstoffröhren 19, 20 angeordnet, die oberhalb und unterhalb des von dem Kühlgefäß 16 umgebenen Rohrs 11 so angeordnet sind, daß die insgesamt vier Schenkel der beiden Leuchtstoffröhren 19, 20 etwa gleichmäßig um den Umfang des Rohrs 11 verteilt sind. Die Lampensockel sind an der rechten Stirnplatte 14 des Gehäuses 10 montiert, wobei in der Darstellung der Figur 1 die obere Leuchtstoffröhre 19 etwas nach rechts versetzt ist, um Platz für den Zulaufstutzen 17 des Kühlsystems zu schaffen.

Innerhalb des Rohrs 11 ist ein statischer Mischer 21 angeordnet, der im wesentlichen über die gesamte Länge des Rohrs 11 verläuft. Wie aus Figur 2 ersichtlich, weist der Mischer 21 eine Vielzahl von in Axialrichtung aufeinanderfolgenden Leitflächen 22 auf, die über kurze axiale Zapfen 23 miteinander verbunden sind. Die Leitflächen 22 sind schraubenflächenartig gestaltet und in Axialrichtung des Rohrs 11 mit abwechselnden Drehrichtungen hintereinander angeordnet, wobei die Eintrittskante einer Leitfläche jeweils senkrecht zur Austrittskante der vorhergehenden Leitfläche steht. Dadurch werden die von der stromaufwärtigen Leitfläche zugeführten beiden Flüssigkeitsstränge immer wieder halbiert. Ferner bewirken die Leitflächen 22, daß sie die zuströmende Flüssigkeit jeweils zur Wandung des Rohrs 11 hin schaufeln. Mit dieser Anordnung wird eine außerordentlich gute Durchmischung der gesamten das Rohr 11 durchströmenden Flüssigkeit erreicht, und sämtliche Anteile der Flüssigkeit werden wiederholt in die Nähe der Rohrwandung gebracht, wo die von den Leuchtstoffröhren 19, 20 ausgehende Strahlung am intensivsten ist.

Die Wellenlänge der Strahlung richtet sich nach dem Anwendungszweck und der Zusammensetzung der zu bestrahlenden Flüssigkeit. Handelt es sich beispielsweise um einen Klebstoff, der sich durch sichtbare Strahlung voraktivieren läßt, so arbeiten die Leuchtstoffröhren 19, 20 mit sichtbarem Licht. Sowohl das Rohr 11 als auch das Kühlgefäß 16 bestehen in diesem Fall aus für sichtbares Licht durchlässigem Glas oder Acrylglas. Ebenso ist das als Kühlmittel verwendete GlycolWasser-Gemisch für sichtbare Strahlung hochdurchlässig.

Die von den Leuchtstoffröhren 19, 20 abgegebene Wärmestrahlung über etwa 800 nm wird dabei durch den das Reaktionsrohr 11 umgebenden Kühlmantel absorbiert.

Um die von den Leuchtstoffröhren 19, 20 abgegebene Strahlung möglichst gut auszunützen, ist die Innenwandung des vorzugsweise zylindrisch gestalteten Gehäuses 10 mit einer die Nutzstrahlung reflektierenden Beschichtung 24 versehen. Um eine unnötige Erwärmung zu vermeiden, können die Beschichtung 24 und der sie tragende Mantel des Gehäuses 10 für Wärmestrahlung durchlässig sein.

Trotz der durch den Mischer 21 im Rohr 11 erzeugten turbulenten Strömung und der die Reaktion der Flüssigkeit innerhalb des Rohrs 11 verzögernden Kühleinrichtung wird es nach längerer Betriebsdauer zu polymerisierten Ablagerungen an der Rohrinnenwand kommen, die den Strömungsquerschnitt allmählich verengen. Ferner wird bei längeren Betriebsunterbrechungen das Auslaßende des Rohrs 11 durch polymerisierte Flüssigkeit verstopfen. In diesem Fall wird die Buchse 12 aus der Stirnplatte 14 herausgeschraubt, so daß sich nun das Rohr 11 samt dem Mischer 21 nach rechts herausziehen und auswechseln läßt. Um eine Verschmutzung des Gerätes zu vermeiden, ist es wichtig, daß das Rohr so herausgezogen wird, daß nur das Austrittsende mit dem bereits verfestigten Klebstoff durch das Innere des Gerätes hindurchgezogen wird.

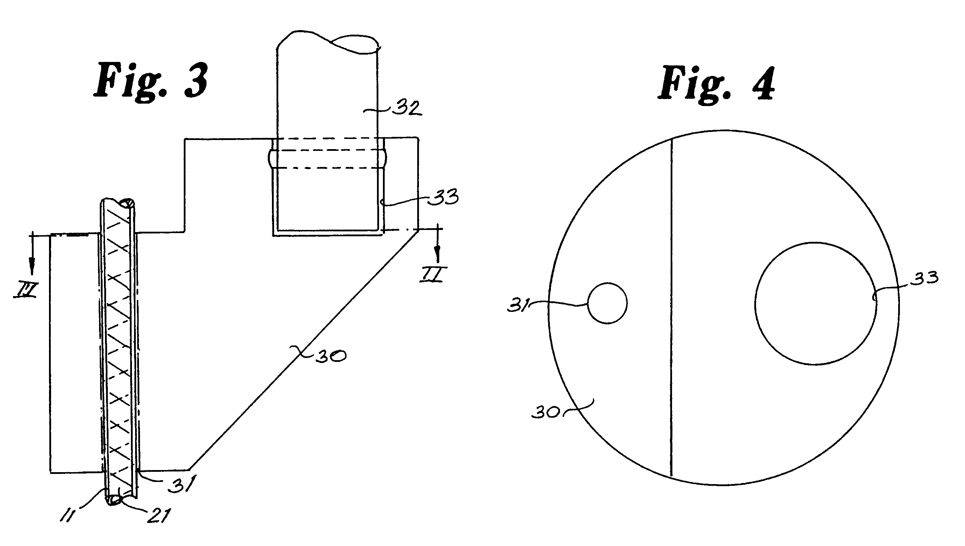

Bei dem in Figur 3 und 4 teilweise dargestellten Gerät durchsetzt das Reaktionsrohr 11 mit dem statischen Mischer 21 eine in einem Lichtleiter-Block 30 ausgebildete Bohrung 31. Der Block 30 besteht aus transparentem Polymethylmetacrylat und ist an seiner gesamten Außenfläche verspiegelt. Die Strahlung zur Polymerisation der durch die Bohrung 31 strömenden Flüssigkeit wird von einer (nicht gezeigten) Kaltlichtquelle erzeugt und in einen Lichtleitstab 32 eingekoppelt, dessen Ende in eine in dem Block 30 vorgesehene Sackbohrung 33 eingeführt ist. Die hier in den Block 30 eingekoppelte Strahlung wird durch Reflexion und Totalreflexion allen Seiten der Bohrung 31 zugeführt, woraus eine weitgehend homogene Bestrahlung der Flüssigkeit resultiert.

Nach Unterbrechung eines Bestrahlungsvorgangs und Verfestigen der Flüssigkeit kann das Rohr 11 mit dem Mischer 21 ohne weiteres aus der Bohrung 31 des Lichtleiter-Blocks 30 herausgezogen werden. Wie in Figur 3 angedeutet, ist ferner das Ende des Lichtleitstabes 32 lösbar in den Lichtleiter-Block 30 eingesteckt, an dem ferner eine (nicht gezeigte) Dosiereinrichtung lösbar befestigt sein kann. Daher läßt sich der Block 30 bei Bedarf leicht aus dem Gerät entnehmen.

## Patentansprüche

1. Gerät zum Bestrahlen einer Flüssigkeit mit einer von der Flüssigkeit durchströmten Rohrleitung (11) aus einem für die verwendete Strahlung durchlässigen Material und einer die Rohrleitung (11) umgebenden Bestrahlungseinrichtung (19, 20; 30, 32), dadurch gekennzeichnet, daß in der Rohrleitung (11) eine Mischeinrichtung (21) mit die Flüssigkeitsströmung quer zur Rohrachse ablenkenden Leitflächen (22) angeordnet ist.

2. Gerät nach Anspruch 1, dadurch gekennzeichnet, daß die Mischeinrichtung ein statischer Mischer (21) mit einer Vielzahl von in Axialrichtung hintereinander angeordneten schraubenförmigen Leitflächen (22) ist, deren jede den zuströmenden Flüssigkeitsstrang zerteilt und von der Achse nach außen umlenkt.

3. Gerät nach Anspruch 1 oder 2, dadurch gekennzeichnet, daß die Bestrahlungseinrichtung mehrere parallel zu der Rohrleitung (11) angeordnete Leuchtstoffröhren (19, 20) umfaßt.

4. Gerät nach einem der Ansprüche 1 bis 3, dadurch gekennzeichnet, daß die Rohrleitung (11) von einer für die Strahlung durchlässigen Kühleinrichtung (16) umgeben ist.

5. Gerät nach Anspruch 4, dadurch gekennzeichnet, daß die Kühleinrichtung ein von einem Kühlmittel durchströmtes, die Rohrleitung (11) koaxial umschließendes Kühlgefäß (16) aufweist.

6. Gerät nach Anspruch 5, dadurch gekennzeichnet, daß die Kühlmittelströmung zur Strömung der zu bestrahlenden Flüssigkeit entgegengerichtet ist.

7. Gerät nach Anspruch 5 oder 6, dadurch gekennzeichnet, daß das Kühlgefäß (16) einen Ringquerschnitt aufweist und die Rohrleitung (11) aus dem Kühlgefäß (16) herausziehbar ist.

8. Gerät nach Anspruch 1 oder 2, dadurch gekennzeichnet, daß die Rohrleitung (11) einen ein Teil der Bestrahlungseinrichtung bildenden Lichtleiter-Block (30) durchsetzt.

9. Gerät nach Anspruch 8, dadurch gekennzeichnet, daß der Lichtleiter-Block (30) an seiner Außenfläche verspiegelt ist.

10. Gerät nach Anspruch 8 oder 9, dadurch gekennzeichnet, daß der Lichtleiter-Block (30) eine Sackbohrung (33) zum Einführen des Endes eines an eine Strahlungsquelle angekoppelten Lichtleitstabes (32) aufweist.

11. Gerät nach Anspruch 10, dadurch gekennzeichnet, daß die Strahlungsquelle eine Kaltlichtquelle ist.

## Claims

1. Apparatus for irradiating a liquid, including a tubular conduit (11) through which the liquid flows and which is made of a material that is transparent to the radiation being used, and irradiation means (19, 20; 30, 32) surrounding the conduit (11), characterised in that mixing means (21) is positioned within the tubular conduit (11) and includes vanes (22) deflecting the liquid flow transversely of the tube axis.

2. The apparatus of claim 1, characterized in that the mixing means is a static mixer (21) having a plurality of helical vanes (22) positioned one behind another in the axial direction, each vane dividing the entering liquid stream and diverting it outwardly from the axis.

3. The apparatus of claim 1 or 2, characterised in that the irradiation means comprises a plurality of fluorescent tubes (19, 20) disposed in parallel with the tubular conduit (11).

4. The apparatus of any one of claims 1 to 3, characterised in that the tubular conduit (11) is surrounded by cooling means (16) which is transparent to the radiation.

5. The apparatus of claim 4, characterised in that the cooling means includes a cooling vessel (16) through which a coolant flows and which coaxially surrounds the tubular conduit (11).

6. The apparatus of claim 5, characterised in that the flow of coolant is opposite the flow of the irradiated liquid.

7. The apparatus of claim 5 or 6, characterised in that the cooling vessel (16) has an annular cross-section and the tubular conduit (11) is capable of being withdrawn from the cooling vessel (16).

8. The apparatus of claim 1 or 2, characterised in that the tubular conduit (11) extends through a light-guiding block (30) that forms part of the irradiation means.

9. The apparatus of claim 8, characterised in that the light-guiding block (30) has a mirror-reflecting outer surface.

10. The apparatus of claim 8 or 9, characterised in that the light-guiding block (30) includes a closed-end bore (33) for insertion of the end of a light-guiding rod (32) which is coupled to a source of radiation.

11. The apparatus of claim 10, characterised in that the source of radiation is a cold-light source.

## Revendications

1. Appareil pour irradier un liquide, comprenant une conduite tubulaire (11) parcourue par le liquide et réalisée à partir d'un matériau perméable au rayonnement utilisé, et un dispositif d'irradiation (19, 20; 30, 32) entourant ladite conduite tubulaire (11), caractérisé en ce que dans la conduite tubulaire (11) est disposé un mélangeur (21) avec des surfaces déflectrices (22) qui devient le courant de liquide transversalement à l'axe du tube.

2. Appareil selon la revendication 1, caractérisé en ce que le dispositif de mélange est un mélangeur statique (21) avec une multiplicité de surfaces déflectrices (22) hélicoïdales disposées les unes derrière les autres dans le sens axial, chacune divisant le courant de liquide arrivant et le déviant à partir de l'axe vers l'extérieur.

3. Appareil selon l'une des revendication 1 ou 2, caractérisé en ce que le dispositif d'irradiation comprend plusieurs tubes fluorescents (19, 20) orientés parallèlement à la conduite tubulaire (11).

4. Appareil selon l'une des revendications 1 à 3, caractérisé en ce que la conduite tubulaire (11) est entourée par un dispositif de refroidissement (16) perméable au rayonnement.

5. Appareil selon la revendication 4; caractérisé en ce que le dispositif de refroidissement comprend une enceinte réfrigérante (16) qui enveloppe coaxialement la conduite tubulaire (11).

6. Appareil selon la revendication 5, caractérise en ce que le courant d'agent réfrigérant est orienté dans le sens opposé à l'écoulement du liquide à irradier.

7. Appareil selon l'une des revendications 5 ou 6, caractérisé en ce que l'appareil réfrigérant (16) présente une section transversale annulaire et que la conduite tubulaire (11) peut être retirée de ladite enceinte réfrigérante (16).

8. Appareil selon l'une des revendications 1 ou 2, caractérisé en ce que la conduite tubulaire (11) traverse un bloc conducteur de lumière (30) qui fait partie du dispositif d'irradiation.

9. Appareil selon la revendication 8, caractérisé en ce que la surface extéripieure du bloc conducteur de lumière (30) est métallisée.

10. Appareil selon l'une des revendications 8 ou 9, caractérisé en ce que le bloc conducteur de lumière (30) présente un trou borgne (33) pour l'introduction de l'extrémité d'un barreau conducteur de lumière (32) couplé avec une source de rayonnement.

11. Appareil selon la revendication 10, caractérisé en ce que la source de rayonnement est une source de lumière froide.
